# EUROPEAN PATENT APPLICATION

(11) **EP 4 663 981 A1**
(43) Date of publication of application: **17.12.2025**
(21) Application number: 24753421.7
(22) Date of filing: 08.02.2024
(51) Int. Cl.: F16J 15/10

(54) **GASKET AND SEALING STRUCTURE**

(30) Priority: 09.02.2023 JP 2023018684
(71) Applicant: NOK Corporation, Minato-ku Tokyo 105-8585 (JP)
(72) Inventor: MIKI, Yohei, Aso-shi, Kumamoto 869-2231 (JP); UCHIYAMA, Masasuke, Aso-shi, Kumamoto 869-2231 (JP)
(74) Representative: TBK
(86) International application number: PCT/JP2024/004339
(87) International publication number: WO 2024/166978

(57) **Abstract**

An object of the present invention is to provide a gasket, a planar shape of which can be easily deformed and which can be easily positioned in a space of a target sealed object, and a sealing structure. A gasket (1), which is capable of sealing a loop-shaped target sealed regions (61, 71) between a pair of members (60, 70) combined with each other, includes a base (22) having a shape along a circumferential direction of the target sealed regions (61, 71), a joint (10), a bending rigidity of which in a width direction is lower than that of the base (22), which is connected to the base (22), and a guide (30) for positioning the gasket (1) in the target sealed regions (61, 71), wherein the guide (30) includes a hole (32) along a joining direction of the pair of members (60, 70), and wherein a positioning pin (50) fixed to the pair of members (60, 70) is inserted in the hole (32).

## Description

### TECHNICAL FIELD

The present invention relates to gaskets and sealing structures.

### BACKGROUND ART

A case of a battery mounted in an electric vehicle (EV) has a large size, in which, for example, a side measures 1 meter, so as to ensure capacity for the battery. A gasket for sealing a space between such a large case of a battery and a cover needs to have a size dependent on the outermost periphery of an opening of the case. Thus, a gasket may be larger than the size of a platen of a molding machine for producing normal sealing parts and so forth for automobiles, etc.; consequently, it is difficult to produce. For such a gasket for sealing such a large opening, Patent Document 1 and Patent Document 2 each disclose a production technique in which an increase in an area of a mold is not necessary, for example.

### Related Art Document

### Patent Document

Patent Document 1: Japanese Patent Application, Laid-Open Publication No. 2016-65635
Patent Document 2: Japanese Patent Application, Laid-Open Publication No. 2007-301874

### SUMMARY OF THE INVENTION

### Problem to be Solved by the Invention

In addition, in a conventional technique, a gasket for sealing a large opening is formed so as to have a folded shape, and in a state of use, the gasket has a shape along a circumferential direction of a target sealed region. Here, when developed from the initial folded shape, which is at a molding step, into the shape along the circumferential direction of the target sealed region, a gasket produced by molding an elastic material generates force to return to the initial state. When such a large gasket is, for example, mounted between a pair of members not provided with any mounting groove for mounting the gasket, there is a problem in that it is difficult to position the gasket in a space between the pair of members.

As described above, in the conventional technique related to a large gasket, when the gasket is mounted between a pair of members that is a target sealed object, a further improvement is required in positioning of the gasket in a space between the pair of members.

The present invention has been achieved in view of the above problem, and an object thereof is to provide a gasket, a planar shape of which can easily be deformed and which can easily be positioned in a space of a target sealed object, and a sealing structure therefor.

### Means for Solving Problem

To achieve the above object, a gasket according to the present invention is a gasket capable of sealing a loop-shaped target sealed region between a pair of members combined with each other, the gasket comprising a base having a shape along a circumferential direction of the target sealed region, a joint connected to the base, a bending rigidity of the joint in a width direction being lower than that of the base, and a guide for positioning of the gasket in the target sealed region, wherein the guide includes a hole along a joining direction of the pair of members, and wherein a positioning pin fixed to the pair of members is inserted in the hole.

In the gasket according to an aspect of the present invention, a planar shape of the joint is a shape in which a section protruding toward an inside of the target sealed region and a section protruding toward an outside of the target sealed region are alternately repeated.

In the gasket according to an aspect of the present invention, the guide includes a protrusion protruding from an inner peripheral surface of the hole and being capable of contacting the positioning pin.

The gasket according to an aspect of the present invention includes a plurality of guides including the guide.

In the gasket according to an aspect of the present invention, a planar shape of the hole corresponds to a cross-sectional shape of the positioning pin.

In the gasket according to an aspect of the present invention, each of the pair of members includes no mounting groove for mounting the gasket.

In the gasket according to an aspect of the present invention, the base includes a seal in contact with each of the pair of members, and a first protrusion protruding from an outer wall surface of the seal along the seal. In a specific aspect, the base further includes a second protrusion protruding from an inner wall surface of the seal along the seal. Furthermore, in another aspect, the first protrusion and the second protrusion are disposed at a center of the seal in a height direction. Furthermore, in the gasket according to another aspect of the present invention, the base includes a seal in contact with each of the pair of members, and a second protrusion protruding from an inner wall surface of the seal along the seal.

To achieve the above object, a sealing structure according to the present invention is a sealing structure comprising a pair of members combined with each other, and a gasket sealing a loop-shaped target sealed region between the pair of members, wherein the gasket includes a base having a shape along a circumferential direction of the target sealed region, a joint connected to the base, a bending rigidity of the joint in an in-plane direction of the target sealed region being lower than that of the base, and a guide for positioning of the gasket in the target sealed region, wherein the guide includes a hole along a joining direction of the pair of members, and wherein a positioning pin fixed to the pair of members is inserted in the hole.

### Effects of Invention

According to the gasket and the sealing structure according to the present invention, its planar shape can easily be deformed, and it is possible for it to be easily positioned in a space formed by a target sealed object.

### BRIEF DESCRIPTION OF THE DRAWINGS

Fig. 1 is a plan view showing a schematic configuration of a gasket according to a First Embodiment of the present invention.
Fig. 2 is a cross section of a joint of the gasket according to the First Embodiment.
Fig. 3 is a cross section of a guide of the gasket according to the First Embodiment.
Fig. 4 is a cross section of a base of the gasket according to the First Embodiment.
Fig. 5 is a cross section of the guide of the gasket according to the First Embodiment.
Fig. 6 is a plan view showing examples of bodies and joints of the gasket according to the First Embodiment and is a plan view showing a state in which the joints are bent.
Fig. 7 is a plan view showing examples of bodies and a joint of the gasket according to the First Embodiment.
Fig. 8 is a plan view showing other examples of bodies and joints of the gasket according to the First Embodiment and is a plan view showing a state in which the joints are bent.
Fig. 9 is a plan view showing other examples of bodies and a joint of the gasket according to the First Embodiment.
Fig. 10 is a plan view showing an example of a shape of the gasket at a molding step.
Fig. 11 is a plan view showing another example of a shape of the gasket at the molding step.
Fig. 12 is a plan view showing a target sealed region included in a case of a battery on which the gasket according to the First Embodiment is mounted.
Fig. 13 is a plan view showing an example in which a joint of the gasket according to the First Embodiment is disposed at a corner of a target sealed region in a state of use.
Fig. 14 is a plan view showing a modification in which a body of the gasket according to the First Embodiment is disposed at a corner of the target sealed region in a state of use.
Fig. 15 is a plan view showing examples of a body and guides of the gasket according to the First Embodiment.
Fig. 16 is a plan view showing modifications 1 of a body and a guide of the gasket according to the First Embodiment.
Fig. 17 is a plan view showing modifications 2 of a body and a guide of the gasket according to the First Embodiment.
Fig. 18 is a plan view showing a body of a gasket according to a Second Embodiment.
Fig. 19 is a cross section of a base according to the Second Embodiment (a cross section taken along a line D-D shown in Fig. 18).
Fig. 20 is an explanatory diagram showing effects of the Second Embodiment.
Fig. 21 is an explanatory diagram showing effects of the Second Embodiment.
Fig. 22 is a cross section of a base according to a modification of the Second Embodiment.
Fig. 23 is a cross section of a base according to a modification of the Second Embodiment.
Fig. 24 is a cross section of a base according to a modification of the Second Embodiment.
Fig. 25 is a cross section of a base according to a modification of the Second Embodiment.
Fig. 26 is a cross section of a joint according to a modification 1.
Fig. 27 is a cross section of a joint according to a modification 2.
Fig. 28 is a cross section of a joint according to a modification 3.
Fig. 29 is a cross section of a joint according to a modification 4.
Fig. 30 is a cross section of a base according to a modification 5.
Fig. 31 is a cross section of a base according to a modification 6.
Fig. 32 is a cross section of a base according to a modification 7.
Fig. 33 is a cross section of a base according to a modification 8.
Fig. 34 is a cross section of a base according to a modification 9.
Fig. 35 is a cross section of a base according to a modification 10.
Fig. 36 is a plan view showing a schematic configuration of a gasket according to a modification 11.
Fig. 37 is a cross section of a base according to a modification 11.

### MODES FOR CARRYING OUT THE INVENTION

Hereinafter, embodiments according to the present invention will now be described with reference to the drawings.

### First Embodiment

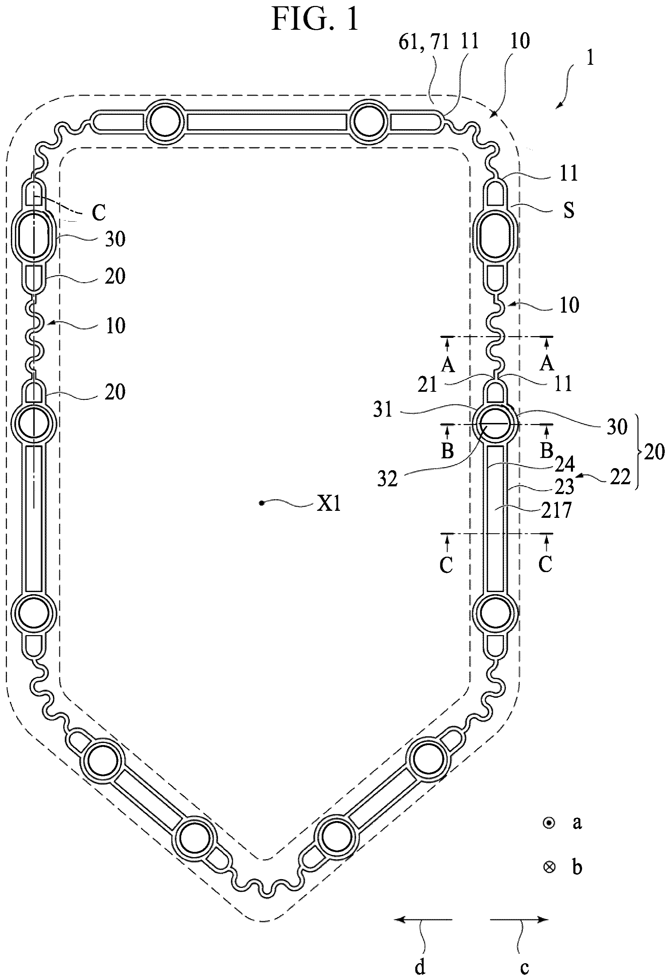

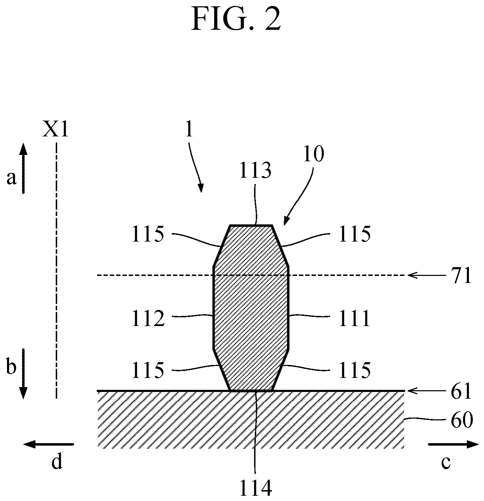

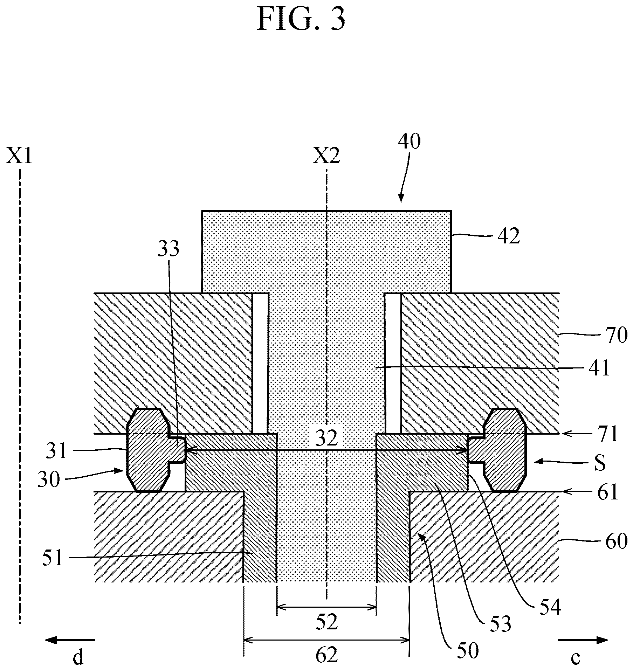

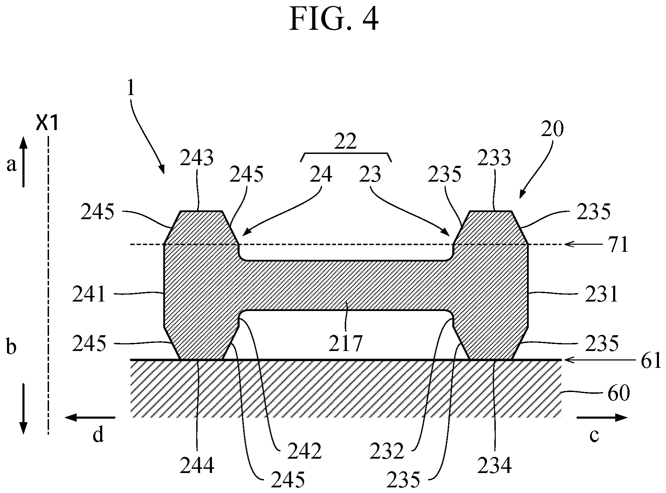

Fig. 1 is a plan view showing a schematic configuration of a gasket 1 according to a First Embodiment of the present invention. Fig. 2 is an A-A cross section of the gasket 1 and is a cross section of a joint 10. Fig. 3 is a B-B cross section of the gasket 1 and is a cross section of a guide 30. Fig. 4 is a C-C cross section of the gasket 1 and is a cross section of a base 22.

Hereinafter, for convenience of explanation, a direction around an axis X1 is referred to as a circumferential direction. The circumferential direction is a longitudinal direction of the gasket 1. In addition, a direction of an arrow a (see Fig. 2 to Fig. 5) along a direction of the axis X1 is referred to as an upward direction. In addition, a direction of an arrow b (see Fig. 2 to Fig. 5) along the direction of the axis X1 is referred to as a downward direction. A direction of extension of the axis X1 is a height direction. In the following, a direction perpendicular to the axis X1 may be referred to as a "radial direction." The radial direction is a lateral direction or a width direction of the gasket 1. A direction (a direction of an arrow c shown in Fig. 2 to Fig. 4), which is away from the axis X1, along the radial direction is referred to as an outward direction along the radial direction. In addition, a direction (a direction of an arrow d shown in Fig. 2) toward the axis X1 is referred to as an inward direction along the radial direction. In addition, a view of a freely selected element in a direction along the axis X1 is referred to as a "plan view." In the following description, when it is explained that a positional relationship between members or a direction of each of the members is upward or downward, the positional relationship or the direction indicates a positional relationship or a direction only in the drawings and does not indicate either a positional relationship between members mounted on an actual vehicle, etc., or a direction of each of the members.

As shown in Fig. 1, the gasket 1 according to the First Embodiment is made of an elastic body, which is formed to have a shape with no ends and is around the axis X1. As shown in Fig. 3, the gasket 1 seals a space S between a case 60 and a cover 70. The case 60 and the cover 70 constitute a housing by being joined together in a state in which the case 60 and the cover 70 face each other. The case 60 accommodates a battery mounted on an electric vehicle, for example. The cover 70 closes an opening of the case 60. A height direction of the gasket 1 (a direction of either the arrow a or the arrow b) is a direction (a joining direction) in which one of the case 60 and the cover 70 is joined to the other.

A surface of the case 60 facing the cover 70 includes a target sealed region 61. Similarly, a surface of the cover 70 facing the case 60 includes a target sealed region 71. In plan view, the target sealed regions 61 and 71 are loop-shaped (for example, annular) regions surrounding the axis X1. The gasket 1 is elastically deformed by being compressed in the space S, which has a shape with no ends and is formed between the target sealed region 61 and the target sealed region 71, thereby sealing a space between the case 60 and the cover 70. The gasket 1 is an example of a sealing device used as a sealing material for shutting fuel gas, oxidant gas, etc., generated in the battery. It should be noted that a combination of the case 60 and the cover 70 is an example of a "pair of members." In Fig. 3, the gasket 1 is shown in a state (hereinafter referred to as a "state of use") in which the gasket 1 is actually mounted between the case 60 and the cover 70.

Neither the case 60 nor the cover 70 is provided with a mounting groove for accommodating and mounting the gasket 1. In Fig. 1, a member shown in dashed line shows the target sealed region 61 of the case 60 and the target sealed region 71 of the cover 70, for convenience, and a mounting groove for accommodating the gasket 1 is not shown.

As shown in Fig. 1, the gasket 1 includes a plurality of joints 10 and a plurality of bodies 20. A respective joint 10 and a respective body 20 are alternately arranged along the circumferential direction of each of the target sealed regions 61 and 71. The joints 10 and the bodies 20 are integrally formed of an elastic body. In the following, a sealing structure constituted of the gasket 1, the case 60, and the cover 70 will be specifically described.

### Joint 10

As shown in Fig. 1, in a state of use, a planar shape of a joint 10 is a bent shape dependent on a planar shape of each of the target sealed regions 61 and 71. The planar shape of the joint 10 is either a shape of an accordion or a wavy shape, for example. Specifically, the planar shape of the joint 10 is a curved shape in which a section protruding toward the inside of each of the target sealed regions 61 and 71 and a section protruding toward the outside of each of the target sealed regions 61 and 71 are alternately repeated. In other words, the planar shape of the joint 10 is a shape in which a shape protruding outwardly from a center line C shown in Fig. 1 and a shape protruding inwardly from the center line C are alternately repeated. The center line C is an axis showing center positions of the joints 10 and the bodies 20 of the gasket 1 in the width direction. The center line C may be referred to as an axis, which passes through centers of the target sealed regions 61 and 71, which are in the width direction, and extends in the circumferential direction. Ends 11 of the joint 10 are connected to bodies 20.

A size of the joint 10 in the width direction is smaller than a size of a body 20 in the width direction; thus, the rigidity of the joint 10 in the width direction (in other words, a bending rigidity in a plane perpendicular to the axis X1) is low compared to the body 20. Specifically, a second moment of area of the joint 10 with respect to the axis X1 is less than a second moment of area of the body 20 with respect to the axis X1. Thus, the joint 10 can easily be deformed in the width direction compared to the body 20. In other words, in the gasket 1, the joint 10 has flexibility.

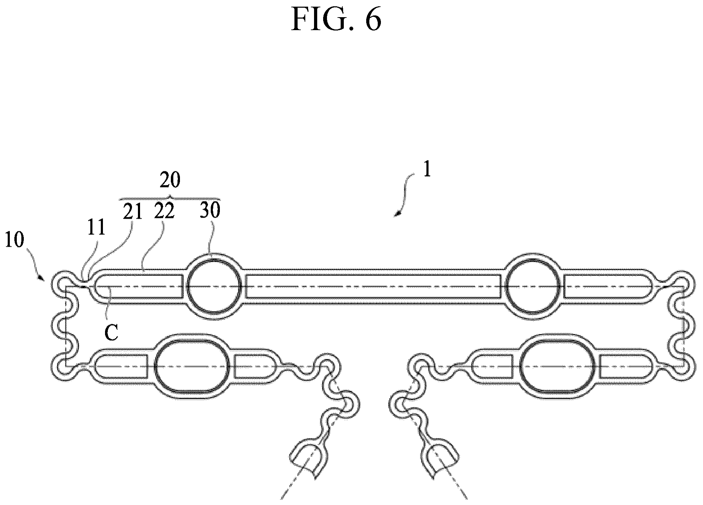

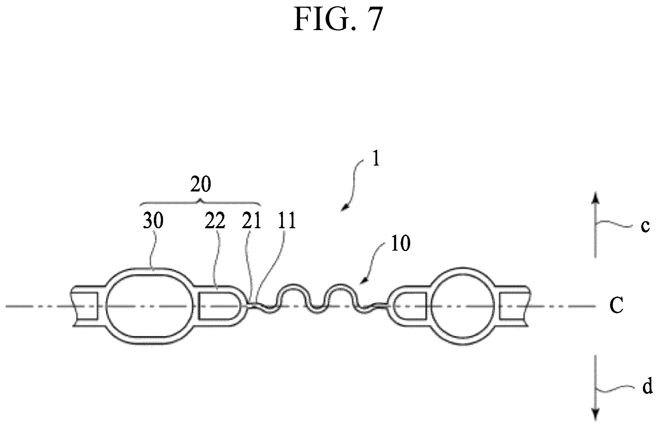

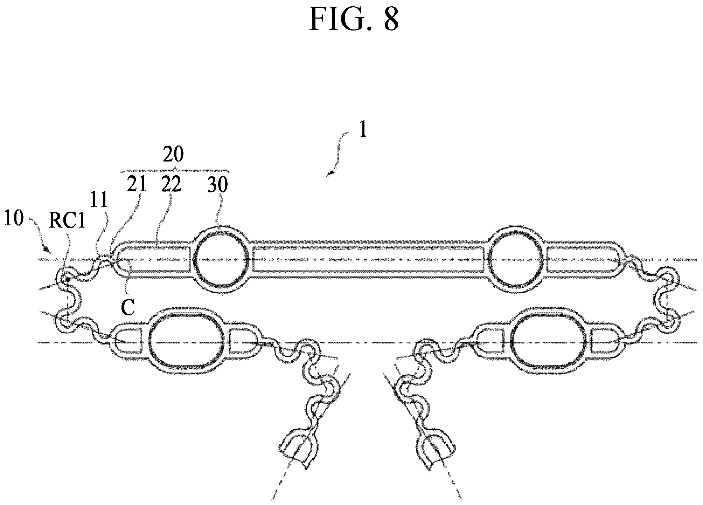

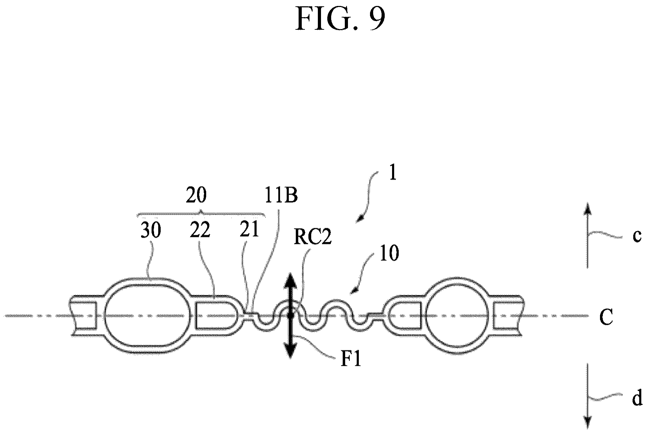

Fig. 6 is a plan view showing examples of bodies 20 and joints 10 of the gasket 1 and is a plan view showing a state in which the joints 10 are bent. Fig. 7 is a plan view showing examples of bodies 20 and a joint 10 of the gasket 1. Fig. 8 is a plan view showing other examples of bodies 20 and joints 10 of the gasket 1 and is a plan view showing a state in which the joints 10 are bent. Fig. 9 is a plan view showing other examples of bodies 20 and a joint 10 of the gasket 1.

As shown in Fig. 6 and Fig. 7, in the gasket 1, an end 11 of a joint 10 and an end 21 of a body 20 are connected to each other along a direction of the center line C.

As shown in Fig. 8 and Fig. 9, the end 11 of the joint 10 may be connected to the end 21 of the body 20 at a predetermined angle relative to the center line C. In the above-described configuration, the end 11 of the joint 10 is connected to the end 21 of the body 20 in a state in which the end 11 of the joint 10 is inclined relative to the center line C an inward direction or an outward direction of each of the target sealed regions 61 and 71. In other words, at the time of molding (see Fig. 8, Fig. 9, Fig. 10, and Fig. 11), the end 11 of the joint 10 is inclined at a predetermined angle relative to the center line C in a direction in which the joint 10 is to be bent. Here, a direction in which the end 11 of the joint 10 is inclined relative to the end 21 of the body 20 may be determined by a direction in which the joint 10 is bent at the time of molding of the gasket 1. For example, the end 11 of the joint 10 is connected to the end 21 of the body 20 in a direction inclined at a predetermined angle relative to the center line C. A length of the joint 10 in the circumferential direction may preferably be fit to a length of a mounted joint 10, considering an angle of the end 11 relative to the center line C.

The end 11 of the joint 10 and the end 21 of the body 20 are formed as shown in Fig. 8 and Fig. 9; thus, when the gasket 1 is extended in the circumferential direction to be mounted on the case 60, an inward force F1 along the width direction and an outward force F1 along the width direction are equally applied to the gasket 1. Thus, the joint 10 is prevented from veering outwardly from a bent direction; as a result, it is possible to deform the joint 10 equally relative to the target sealed regions 61 and 71. In addition, centers RC1 and RC2 of bent shape portions of the joint 10 in the width direction are located on or near the center line C. Thus, it is possible to prevent misalignment of the gasket 1 relative to the target sealed regions 61 and 71 and detachment of the gasket 1 from the target sealed regions 61 and 71 and to obtain a stable sealing property. In particular, since neither the case 60 nor the cover 70 is provided with a mounting groove for accommodating and mounting the gasket 1, it is possible to obtain a more stable sealing property.

It should be noted that the gasket 1 may include one or both of a configuration, in which the end 11 of the joint 10 is connected to the end 21 of the body 20 along the center line C as shown in Fig. 6 and Fig. 7, and a configuration, in which the end 11 of the joint 10 is connected to the end 21 of the body 20 at a predetermined angle relative to the center line C as shown in Fig. 8 and Fig. 9.

As shown in Fig. 2, a cross-sectional shape of the joint 10 is, for example, an octagonal shape or a substantially octagonal shape, which is elongated in the height direction. Specifically, the joint 10 includes a side surface 111, a side surface 112, an upper surface 113, a lower surface 114, and inclined surfaces 115. It should be noted that the cross-sectional shape of the joint 10 is not limited to the above-described example.

The side surface 111 is a side surface of the joint 10 that faces outwardly. The side surface 111 is a flat surface or a substantially flat surface along the axis X1. In a state of use, the side surface 111 faces outwardly in the space S between the case 60 and the cover 70.

The side surface 112 is a side surface of the joint 10 that faces inwardly. In other words, the side surface 111 and the side surface 112 face away from each other in the width direction. The side surface 112 is a flat surface or a substantially flat surface along the axis X1. In a state of use, the side surface 112 faces inwardly in the space S between the case 60 and the cover 70.

The upper surface 113 is a surface of the joint 10 that faces upwardly. The upper surface 113 is a flat surface or a substantially flat surface perpendicular to the axis X1. In a state of use, the upper surface 113 is in contact with the target sealed region 71 of the cover 70. The upper surface 113 has a shape along the target sealed region 71 of the cover 70. The upper surface 113 and the target sealed region 71 constitute an upper sealing surface.

The lower surface 114 is a surface of the joint 10 that faces downwardly. The lower surface 114 is a flat surface or a substantially flat surface perpendicular to the axis X1. In other words, the upper surface 113 and the lower surface 114 are parallel to each other. In a state of use, the lower surface 114 is in contact with the target sealed region 61 of the case 60. The lower surface 114 has a shape along the target sealed region 61 of the case 60. The lower surface 114 and the target sealed region 61 constitute a lower sealing surface.

Inclined surfaces 115 are inclined surfaces that connect the upper surface 113 to each of the side surface 111 and the side surface 112. In addition, the other inclined surfaces 115 are inclined surfaces that connect the lower surface 114 to each of the side surface 111 and the side surface 112.

As shown in Fig. 1 and Fig. 2, a size of the joint 10 in the width direction is less than a size of the body 20 in the width direction such that the joint 10 is easily deformed compared to the body 20. Considering deformation following compression of the gasket 1 in the height direction in a state of use, it is desirable for a shape of a cross section of the joint 10 to be a longitudinal shape in which a size in the width direction is less than a size in the height direction.

On the other hand, the gasket 1 provided with the joint 10 is used in the space S between the case 60 and the cover 70 that are provided with no mounting groove. Thus, not only when mounted in the space S, but also compressed in the space S, the joint 10 needs to maintain its position by its own rigidity alone. Since the joint 10 has a planar shape of an accordion, the joint 10 ensures rigidity against compression in the height direction in a state of use. Thus, compared to a configuration in which a size of the joint 10 in the width direction is only less than a size of the body 20 in the width direction so as to be easily deformed, it is possible to prevent the joint 10 from falling down in the space S not only when the joint 10 is mounted in the space S, but also when the joint 10 is compressed in the space S.

In addition, since the joint 10 has a shape of an accordion, it is possible to extend and contract a length of the joint 10 in the circumferential direction. Thus, when a circumferential length of the gasket 1 is too long or too short due to size errors of the case 60, the cover 70, or the gasket 1, the gasket 1 can be adjusted for the size errors. In other words, since the joint 10 is included, the gasket 1 can ensure that the entire device is in a proper mounting state in the space S.

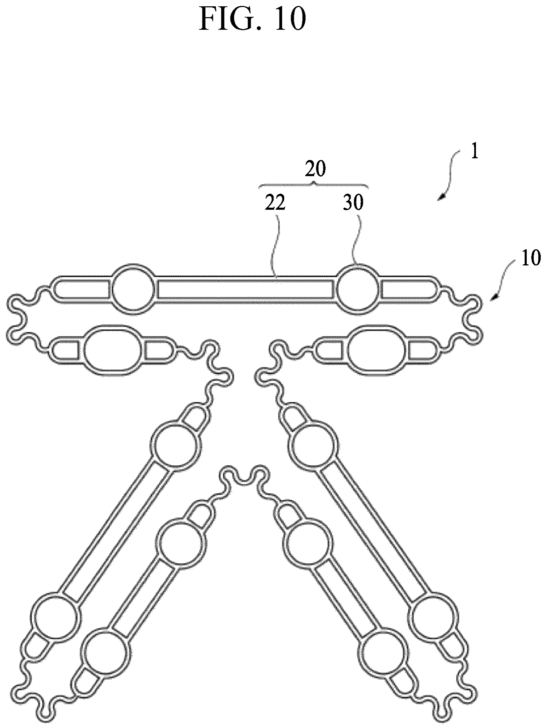

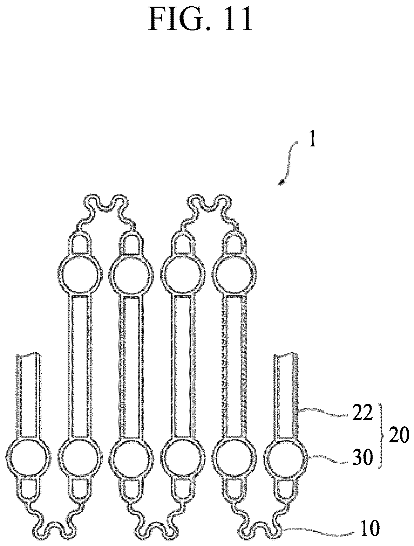

Fig. 10 is a plan view showing an example of a shape of the gasket 1 in the molding step. Fig. 11 is a plan view showing another example of a shape of the gasket 1 in the molding step.

As described above, in the gasket 1, the joint 10 is formed to have a shape of an accordion in which curves are repeated in the circumferential direction of each of the target sealed regions 61 and 71. Thus, as shown in Fig. 10 and Fig. 11, the joint 10 can be molded such that the joint 10 is bent relative to planar shapes of the target sealed regions 61 and 71 at the molding step at which the joint 10 is disposed on a platen in a molding machine. When the gasket 1 is mounted, the joint 10 is developed in accordance with a planar shape (contour) of the case 60 of the battery. In other words, since the gasket 1 includes the joint 10, it is possible to easily deform a planar shape of the entire gasket 1. Thus, the gasket 1 can effectively use a space on the platen within the molding machine during molding. Consequently, since the gasket 1 includes the joint 10, it is possible to easily produce a product having an elongated circumferential length. In addition, since the gasket 1 is easily folded during transportation, etc., it is possible to improve convenience during transportation, etc.

### Body 20

The body 20 includes a base 22 and the guide 30. As described above, the end 21 of the body 20 is connected to the end 11 of the joint 10.

As shown in Fig. 1, in a state of use, a planar shape of the base 22 is a shape along the planar shapes of the target sealed regions 61 and 71. In other words, the planar shape of the base 22 is a shape along a target sealed section.

As shown in Fig. 1 and Fig. 4, the base 22 includes a first seal 23, a second seal 24, and a connector 217. The first seal 23, the second seal 24, and the connector 217 are integrally formed. The first seal 23 and the second seal 24 are connected to each other by the connector 217, which extends in the width direction. The first seal 23 is provided more outwardly than the connector 217. The second seal 24 is provided more inwardly than the connector 217. A cross-sectional shape of each of the first seal 23 and the second seal 24 is, for example, an octagonal shape or a substantially octagonal shape, which is elongated in the height direction. It should be noted that the cross-sectional shape of the base 22 is not limited to the above-described example.

As shown in Fig. 4, the first seal 23 includes a side surface 231, a side surface 232, an upper surface 233, a lower surface 234, and inclined surfaces 235. The second seal 24 includes a side surface 241, a side surface 242, an upper surface 243, a lower surface 244, and inclined surfaces 245.

The side surface 231 of the first seal 23 is a side surface of the first seal 23 that faces outwardly. The side surface 231 is a flat surface or a substantially flat surface along the axis X1. In a state of use, the side surface 231 faces outwardly in the space S between the case 60 and the cover 70.

The side surface 232 is a side surface of the first seal 23 that faces inwardly. The side surface 232 is a flat surface or a substantially flat surface along the axis X1. In a state of use, the side surface 231 faces inwardly in the space S between the case 60 and the cover 70.

The side surface 241 of the second seal 24 is a side surface of the second seal 24 that faces inwardly. The side surface 241 is a flat surface or a substantially flat surface along the axis X1. In a state of use, the side surface 241 faces inwardly in the space S between the case 60 and the cover 70.

The side surface 242 is a side surface of the second seal 24 that faces outwardly. The side surface 242 is a flat surface or a substantially flat surface along the axis X1. In a state of use, the side surface 242 faces outwardly in the space S between the case 60 and the cover 70.

The side surface 232 of the first seal 23 and the side surface 242 of the second seal 24 face each other at a predetermined interval. The connector 217 is connected to each of the side surface 232 of the first seal 23 and the side surface 242 of the second seal 24.

The upper surface 233 of the first seal 23 is a surface of the first seal 23 that faces upwardly. The upper surface 243 of the second seal 24 is a surface of the second seal 24 that faces upwardly. The upper surface 233 and the upper surface 243 are flat surfaces or substantially flat surfaces perpendicular to the axis X1. In a state of use, the upper surface 233 and the upper surface 243 face the target sealed region 71 of the cover 70. Specifically, in a state of use, the upper surface 233 and the upper surface 243 extend along the target sealed region 71 and are in contact with the target sealed region 71. The upper surface 233 of the first seal 23, the upper surface 243 of the second seal 24, and the target sealed region 71 constitute the upper sealing surface.

The lower surface 234 of the first seal 23 is a surface of the first seal 23 that faces downwardly. The lower surface 244 of the second seal 24 is a surface of the second seal 24 that faces downwardly. The lower surface 234 and the lower surface 244 are flat surfaces or substantially flat surfaces perpendicular to the axis X1. In a state of use, the lower surface 234 and the lower surface 244 face the target sealed region 61 of the case 60. Specifically, in a state of use, the lower surface 234 and the lower surface 244 extend along the target sealed region 61 and are in contact with the target sealed region 61. The lower surface 234 of the first seal 23, the lower surface 244 of the second seal 24, and the target sealed region 61 constitute the lower sealing surface.

The inclined surfaces 235 of the first seal 23 connect the upper surface 233 and the lower surface 234 to the side surface 231 and the side surface 232. Similarly, the inclined surfaces 245 of the second seal 24 connect the upper surface 243 and the lower surface 244 to the side surface 241 and the side surface 242.

As shown in Fig. 4, the base 22 of the body 20 has a shape in which the first seal 23 and the second seal 24 are connected by the connector 217 to each other. According to the above-described configuration, the base 22 can ensure the rigidity of the base 22 each in the height direction and in the width direction; thus, it is possible to stabilize a position of the base 22 during assembly and during compression. In addition, a size of the base 22 in the width direction is larger than a size of the joint 10 in the width direction. With the above-described configuration, the rigidity of the base 22 in the width direction is high compared to the joint 10. Thus, the body 20 is less likely to be deformed compared to the joint 10. In other words, since the body 20 is included, it is possible to stabilize a position of the gasket 1 (especially the body 20) during assembly and during compression.

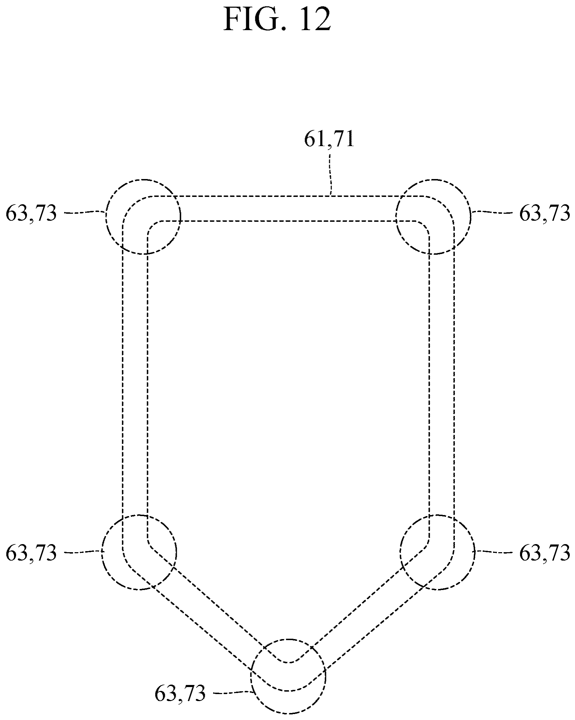

Fig. 12 is a plan view showing the target sealed regions 61 and 71 included in the case 60 and the cover 70. As in Fig. 1, for convenience, dashed lines shown in Fig. 12 show the target sealed regions 61 and 71 included in the case 60 and the cover 70 and are not lines showing a mounting groove for accommodating the gasket 1. As shown in Fig. 12, the target sealed region 61 includes corners 63, and the target sealed region 71 includes corners 73. In plan view, a corner 63 and a corner 73 are sections that are bent.

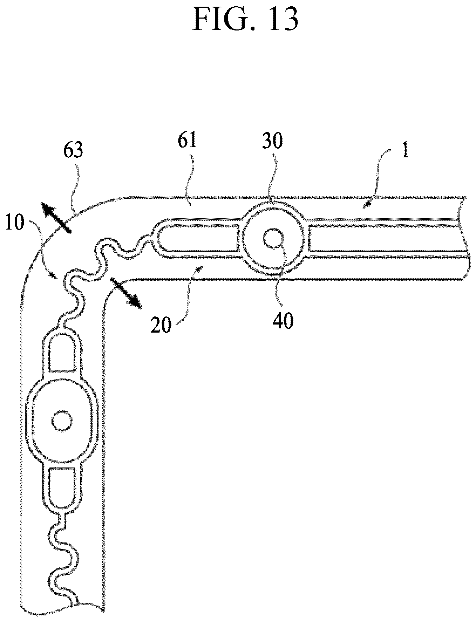

Fig. 13 is an enlarged plan view showing a vicinity of a corner 63 of the target sealed region 61. In a configuration shown in Fig. 13, a joint 10 of the gasket 1 is disposed at the corner 63 of the target sealed region 61 in a state of use. In other words, when bases 22 of the gasket 1 are disposed on straight portions or substantially straight portions of the target sealed regions 61 and 71 (see Fig. 1), the joints 10 are disposed at the corners 63 of the target sealed region 61 of the case 60. Similarly, the joints 10 of the gasket 1 are disposed at the corner 73 of the target sealed region 71 in a state of use. According to a configuration in which the joints 10 are disposed at the corners 63 and 73, each of the bases 22 of the gasket 1 can be formed in a simple straight shape; thus, it is possible to more effectively use the space of the platen during molding.

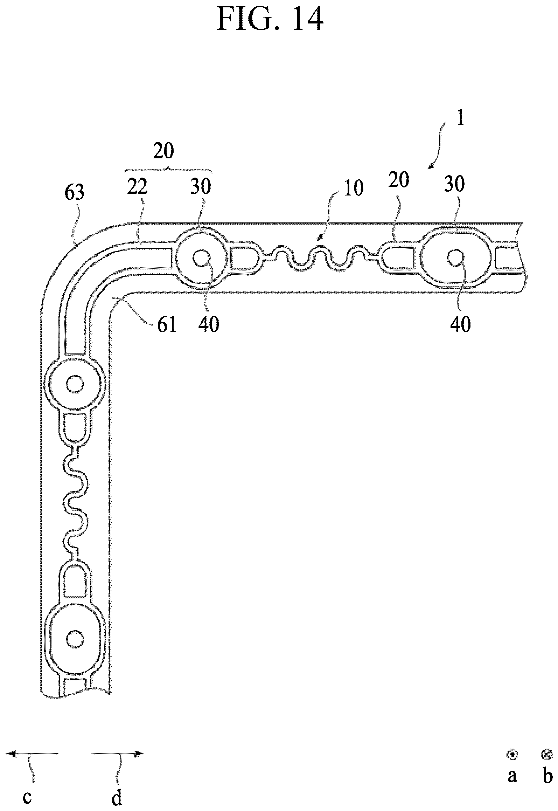

Fig. 14 is an enlarged plan view showing a vicinity of a corner 63 of the target sealed region 61 in a configuration different from the configuration shown in Fig. 13. In the configuration shown in Fig. 14, a body 20 of the gasket 1 is disposed at the corner 63 of the target sealed region 61 in a state of use. The gasket 1 shown in Fig. 14 differs from the gasket 1 shown in Fig. 13, and a planar shape of a base 22 of the body 20 is a shape bent along shapes of corners 63 and 73 of the target sealed regions 61 and 71. In the configuration in which the base 22 is disposed at the corners 63 and 73, the gasket 1 can prevent the base 22 disposed on the corners 63 and 73 from being affected by excess and deficiency of the circumferential length; thus, it is possible to stabilize a state in which the gasket 1 is mounted. In addition, the base 22 of the gasket 1 is used as a reference for positioning the gasket 1 in the circumferential direction during assembly.

### Guide 30

The guide 30 is provided adjacent to the base 22 in the circumferential direction of the body 20. The guide 30 is used for positioning the gasket 1 relative to the target sealed regions 61 and 71 in a plane perpendicular to the axis X1. The guide 30 includes a hole 32 passing through the body 20 in the joining direction, in which the case 60 and the cover 70 are joined together, i.e., in the height direction.

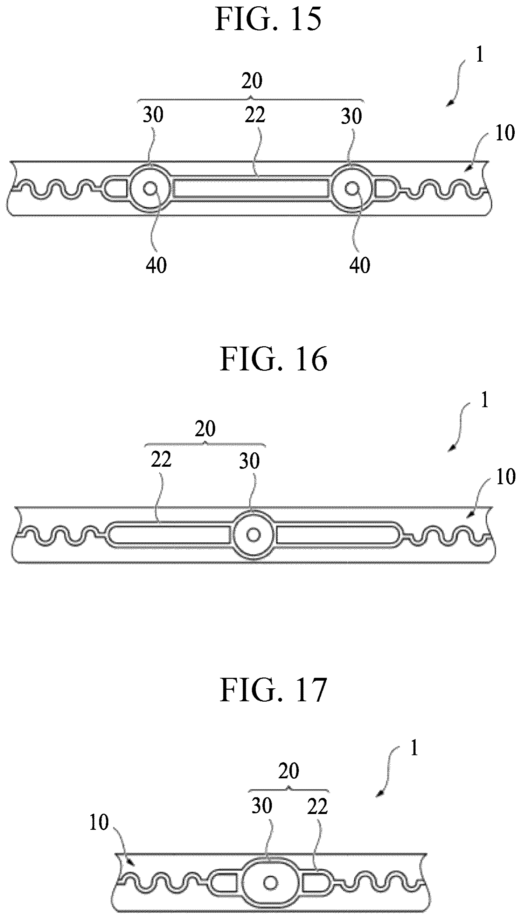

Fig. 15 and Fig. 16 are plan views showing examples of a body 20 and one or more guides 30 of the gasket 1. In Fig. 15, a configuration is shown in which a single body 20 is provided with a plurality of guides 30. In Fig. 16, a configuration is shown in which a single body 20 is provided with a single guide 30. It should be noted that, in the gasket 1, the number of guides 30 provided on a single body 20 is not particularly limited. However, from a viewpoint of preventing the gasket 1 from moving or rotating in a plane perpendicular to the axis X1, it is desirable for a single body 20 to include a plurality of guides 30 as shown in Fig. 15. In addition, as long as a portion of the body 20 provided with a guide 30 is adjacent to a base 22, the portion of the body 20 may be in a vicinity of an end 21 of the body 20 or may be a central portion of the body 20.

Fig. 17 is a plan view showing modifications of a body 20 and a guide 30 of the gasket 1. A planar shape of the guide 30 of the gasket 1 is not limited to a circular shape or a substantially circular shape shown in Fig. 1, Fig. 15, and Fig. 16, and it may be, for example, an oval shape or a substantially oval shape as shown in Fig. 17, or may be a polygon, etc. The guide 30, a planar shape of which is an oval shape or a substantially oval shape, can be used when it is difficult to dispose a plurality of guides 30 that are circular shapes or substantially circular shapes, for example.

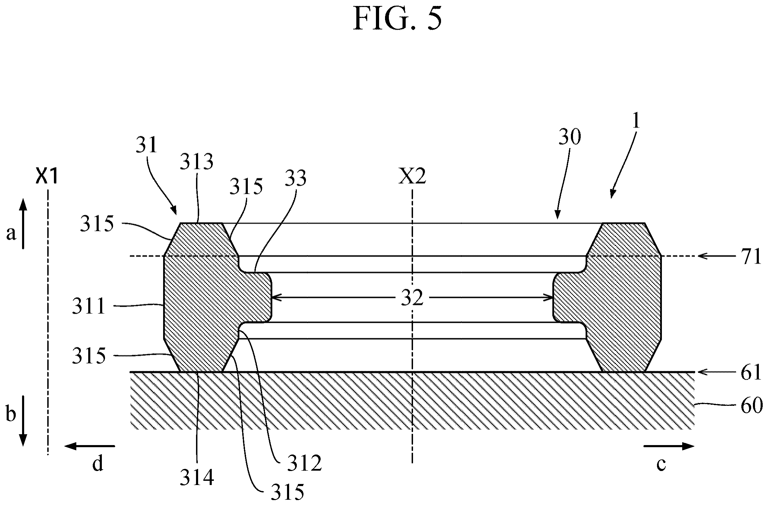

Fig. 5 is a cross section of a guide 30. As shown in Fig. 5, the guide 30 includes a third seal 31 and a protrusion 33. The third seal 31 and the protrusion 33 are integrally formed. A size of the third seal 31 in the height direction (a thickness of the third seal 31) is greater than a size of the protrusion 33 in the height direction (a thickness of the protrusion 33). It should be noted that an axis X2 shown in Fig. 5 is a central axis of the guide 30.

The third seal 31 is an annular section. A cross-sectional shape of the third seal 31 is, for example, an octagonal shape or a substantially octagonal shape, which is elongated in the height direction. Specifically, the third seal 31 includes an outer peripheral surface 311, an inner peripheral surface 312, an upper surface 313, a lower surface 314, and inclined surfaces 315. It should be noted that the cross-sectional shape of the third seal 31 is not limited to the above example.

The outer peripheral surface 311 is an outer wall surface of the third seal 31 that faces away from the axis X2 of the hole 32. Specifically, the outer peripheral surface 311 is a circular arc surface having a central axis as the axis X2. The inner peripheral surface 312 is an inner wall surface of the third seal 31 that faces the axis X2 of the hole 32. Specifically, the inner peripheral surface 312 is a circular arc surface having a central axis as the axis X2. The protrusion 33 is connected to the inner peripheral surface 312 of the third seal 31.

The upper surface 313 is a surface of the third seal 31 that faces upwardly and is formed in a ring around the axis X2. The upper surface 313 is a flat surface or a substantially flat surface perpendicular to the axis X2. In a state of use, the upper surface 213 is in contact with the target sealed region 71 of the cover 70. The upper surface 313 of the third seal 31 and the target sealed region 71 constitute the upper sealing surface. The upper surface 313 protrudes upwardly from a level of an upper surface of the protrusion 33.

The lower surface 314 is a surface of the third seal 31 that faces downwardly and is formed in a ring around the axis X2. The lower surface 314 is a flat surface or a substantially flat surface perpendicular to the axis X2. In other words, the upper surface 313 and the lower surface 314 are parallel to each other. In a state of use, the lower surface 314 is in contact with the target sealed region 61 of the case 60. The lower surface 314 of the third seal 31 and the target sealed region 61 constitute the lower sealing surface. The lower surface 314 protrudes downwardly from a level of a lower surface of the protrusion 33.

Inclined surfaces 315 are inclined surfaces that connect the upper surface 313 to each of the outer peripheral surface 311 and the inner peripheral surface 312. In addition, the other inclined surfaces 315 are inclined surfaces that connect the lower surface 314 to each of the outer peripheral surface 311 and the inner peripheral surface 312.

The third seal 31 surrounds the protrusion 33. The protrusion 33, together with the inner peripheral surface 312 of the third seal 31, is integrally formed. The protrusion 33 is formed in a ring around the axis X2. A circular space or a substantially circular space surrounded by the protrusion 33 is the hole 32 used for positioning the gasket 1. The hole 32 is disposed inside the third seal 31. The axis X2 may be referred to as the central axis of the hole 32.

As shown in Fig. 3, in a state of use, a positioning pin 50 is inserted in the hole 32. A planar shape of the hole 32 corresponds to a cross-sectional shape of the positioning pin 50 in a plane perpendicular to the axis X2. An inner peripheral surface of the protrusion 33 can be in contact with the positioning pin 50 (an outer peripheral surface 54 of a head 53) inserted in the hole 32.

It should be noted that each of the planar shape of the hole 32 and the cross-sectional shape of the positioning pin 50 is not limited to a circular shape shown in Fig. 1, etc., and it may be an elliptical shape, a substantially elliptical shape, an oval shape, a substantially oval shape, a triangular shape, a substantially triangular shape, a square shape, or a substantially square shape, etc. In addition, the planar shape of the hole 32 may differ from the cross-sectional shape of the positioning pin 50. Specifically, the planar shape of the hole 32 may be an oval shape or a substantially oval shape, and the cross-sectional shape of the positioning pin 50 may be a circular shape or a substantially circular shape.

The positioning pin 50 and a cover fixing pin 40 can be inserted in the hole 32. In a state of use of the gasket 1, the positioning pin 50 and the cover fixing pin 40 are inserted in the hole 32.

The positioning pin 50 includes a shaft 51, an insertion hole 52, and the head 53. On the other hand, the target sealed region 61 of the case 60 is provided with a pin insertion hole 62. An inner diameter of the pin insertion hole 62 is substantially the same as an outer diameter of the shaft 51 of the positioning pin 50. In a state of use of the gasket 1, the shaft 51 is inserted in the pin insertion hole 62 of the case 60.

The shaft 51 is provided with the insertion hole 52. In other words, the shaft 51 is a cylindrical section. In a state of use of the gasket 1, a shaft 41 of the cover fixing pin 40 is inserted in the insertion hole 52. Specifically, the shaft 41 of the cover fixing pin 40 is pressed into the insertion hole 52. As described above, in a state of use, the positioning pin 50 and the cover fixing pin 40 are inserted in the pin insertion hole 62 of the case 60.

The head 53 is provided at an end of the shaft 51. A diameter of the head 53 is greater than that of the shaft 51. Thus, in a state in which the shaft 51 is inserted in the pin insertion hole 62, the head 53 is exposed upwardly from the target sealed region 61 of the case 60. In a state of use of the gasket 1, the head 53 is inserted in the hole 32 of the guide 30. Specifically, in a state of use, an outer peripheral surface 54 of the head 53 is in contact with an inner peripheral surface of the hole 32 of the guide 30.

The cover fixing pin 40 includes the shaft 41 and a head 42. In a state of use of the gasket 1, the shaft 41 is inserted in the insertion hole 52 of the positioning pin 50. In other words, in a state of use, the shaft 51 of the positioning pin 50 and the shaft 41 of the cover fixing pin 40 are inserted in the pin insertion hole 62 of the case 60. The head 42 is provided at an end of the shaft 41. A diameter of the head 42 is greater than that of the shaft 41. In a state in which the gasket 1 is fixed between the case 60 and the cover 70, the head 42 of the cover fixing pin 40 is exposed upwardly from an upper surface of the cover 70.

As shown in Fig. 3, the guide 30 of the body 20 includes the annular third seal 31 having a center as the axis X2. Since the third seal 31 described above is included, the rigidity of the base 22 is ensured; thus, it is possible to stabilize a position of the gasket 1 (especially, the body 20) during assembly and during compression.

In addition, in a state of use, the positioning pin 50, together with the cover fixing pin 40 for fixing the case 60 and the cover 70, is inserted in the hole 32 of the guide 30. The positioning pin 50 determines a position of the gasket 1 in a plane perpendicular to the axis X1. In addition, the cover fixing pin 40 and the positioning pin 50 determine a height of the gasket 1 compressed in the height direction in the space S between the case 60 and the cover 70.

Here, by inserting the positioning pin 50 in the hole 32 of the guide 30, the position of the gasket 1 is determined in the plane perpendicular to the axis X1. Thus, in a state in which the target sealed region 61 of the case 60 or the target sealed region 71 of the cover 70 is not provided with any positioning structure such as a groove for accommodating the gasket 1, it is possible to mount the gasket 1 in a state in which a proper compression margin is secured.

In addition, the protrusion 33 is provided on an inner periphery of the third seal 31 of the guide 30. Since the protrusion 33 is provided, at a step of attaching the cover 70 to the case 60, it is possible to reduce the probability that the gasket 1 may be bitten between the head 53 of the positioning pin 50 and the target sealed region 71 of the cover 70.

### Second Embodiment

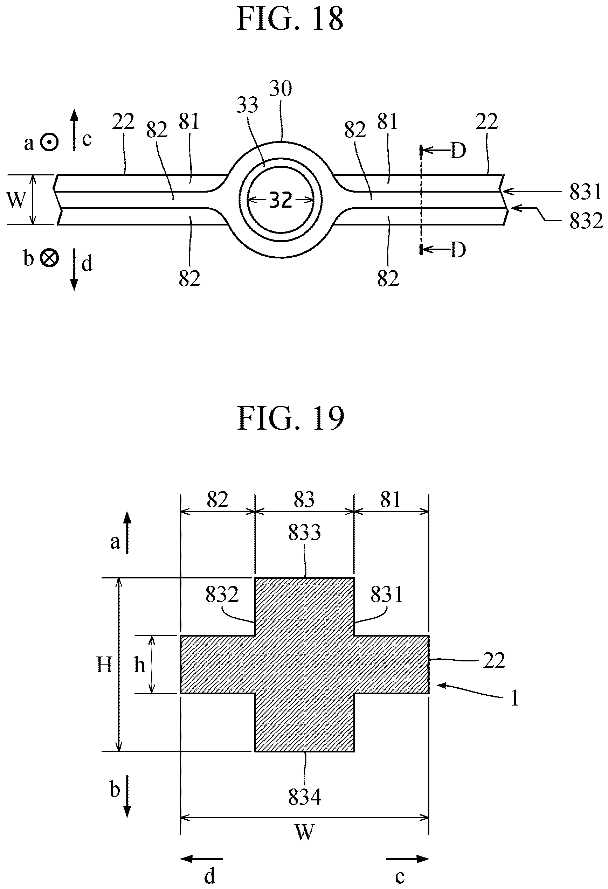

Fig. 18 is a plan view showing a part of a gasket 1 according to a Second Embodiment. Fig. 19 is a cross section taken along a line D-D shown in Fig. 18. As well as the gasket 1 according to the First Embodiment, the gasket 1 according to the Second Embodiment is a loop-shaped structure in which a respective joint 10 and a respective body 20 are alternately arranged along the circumferential direction. In Fig. 18, a vicinity of a body 20 of the gasket 1 is shown. The gasket 1 according to the Second Embodiment differs in cross-sectional shape of base 22 from the gasket 1 according to the First Embodiment. It should be noted that as in the First Embodiment, a planar shape of a base 22 according to the Second Embodiment is a shape along the circumferential direction of each of the target sealed regions 61 and 71.

As shown in Fig. 18 and Fig. 19, the base 22 according to the Second Embodiment includes a first protrusion 81, a second protrusion 82, and a seal 83. The first protrusion 81, the second protrusion 82, and the seal 83 are integrally formed.

In a state of use, the seal 83 is a section extending along the target sealed regions 61 and 71. A cross-sectional shape of the seal 83 is rectangular. Specifically, the cross-sectional shape of the seal 83 is a vertically elongated rectangular shape in which its height is greater than its width. In other words, the seal 83 includes an outer wall surface 831, an inner wall surface 832, an upper surface 833, and a lower surface 834.

The outer wall surface 831 and the inner wall surface 832 are side surfaces facing away from each other in the width direction of the gasket 1. Specifically, the outer wall surface 831 is an outer peripheral surface facing away from the axis X1 (i.e., outwardly) in a state of use. On the other hand, the inner wall surface 832 is an inner peripheral surface facing the axis X1 in a state of use. The outer wall surface 831 and the inner wall surface 832 are planes or curved surfaces along the axis X1.

The upper surface 833 is a surface of the seal 83 that faces upwardly. The upper surface 833 is a flat surface or a substantially flat surface perpendicular to the axis X1. The upper surface 833 faces the target sealed region 71 of the cover 70 in a state of use. Specifically, in a state of use, the upper surface 833 extends along the target sealed region 71 of the cover 70 and is in contact with the target sealed region 71.

The lower surface 834 is a surface of the seal 83 that faces downwardly. The lower surface 834 is a flat surface or a substantially flat surface perpendicular to the axis X1. The lower surface 834 faces the target sealed region 61 of the case 60 in a state of use. Specifically, in a state of use, the lower surface 834 extends along the target sealed region 61 of the case 60 and is in contact with the target sealed region 61. As described above, the seal 83 according to the Second Embodiment is in contact with the case 60 and the cover 70.

The first protrusion 81 is a section protruding outwardly from the outer wall surface 831 of the seal 83. The first protrusion 81 extends along the seal 83. Specifically, the first protrusion 81 extends along the seal 83 over substantially the entire outer wall surface 831 in its longitudinal direction. A height and a width of the first protrusion 81 are substantially constant over the entire first protrusion 81 in its longitudinal direction.

The second protrusion 82 is a section protruding inwardly from the inner wall surface 832 of the seal 83. The second protrusion 82 extends along the seal 83. Specifically, the second protrusion 82 extends along the seal 83 over substantially the entire inner wall surface 832 in its longitudinal direction. A height and a width of the second protrusion 82 are substantially constant over the entire second protrusion 82 in its longitudinal direction.

In Fig. 18 and Fig. 19, a width W of the base 22 is shown. The width W is a distance between an outer peripheral surface of the first protrusion 81 and an inner peripheral surface of the second protrusion 82. Furthermore, in Fig. 19, a height H of the base 22 is shown. The height H is a distance between the upper surface 833 and the lower surface 834 of the seal 83. As will be understood from Fig. 19, the width W of the base 22 is greater than the height H (W > H). It should be noted that a configuration, in which the width W is less than the height H, or a configuration, in which the width W and the height H are the same, is assumed.

A height h of the first protrusion 81 is the same as that of the second protrusion 82. The height h of each of the first protrusion 81 and the second protrusion 82 is less than the height H of the seal 83 (h < H). As shown in Fig. 19, the first protrusion 81 and the second protrusion 82 are disposed at the center of the seal 83 in the height direction. Thus, the upper surface 833 of the seal 83 protrudes upwardly from the upper surfaces of the first protrusion 81 and the second protrusion 82, and the lower surface 834 of the seal 83 protrudes downwardly from the lower surfaces of the first protrusion 81 and the second protrusion 82. As described above, the cross-sectional shape of the base 22 according to the Second Embodiment is substantially crisscross.

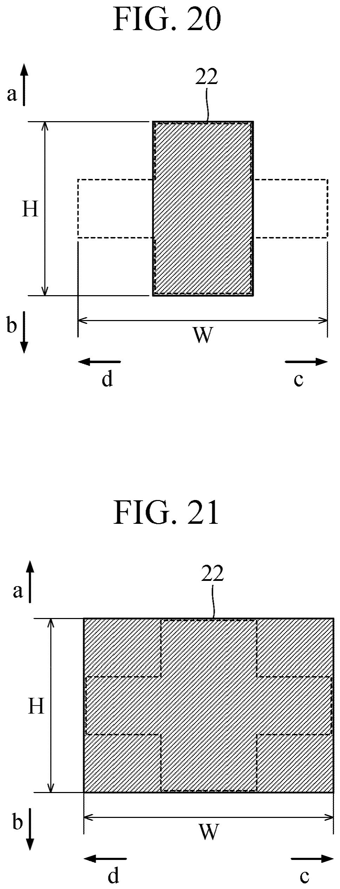

Fig. 20 and Fig. 21 are explanatory diagrams showing effects of the Second Embodiment. In Fig. 20, a cross section of a base 22 in a comparative example 1 is shown. In Fig. 21, a cross section of a base 22 in a comparative example 2 is shown. In Fig. 20 and Fig. 21, a cross section of the base 22 according to the Second Embodiment is shown in dashed line.

The cross section of the base 22 in the comparative example 1 (Fig. 20) has a shape of a vertically elongated rectangle having a width and a height H that are substantially the same as those of the seal 83 according to the Second Embodiment. In the comparative example 1, the rigidity of the base 22 in the width direction is not sufficiently secured. Thus, in a step of mounting the gasket 1 in the space S, the base 22 is flexed in a plane perpendicular to the axis X1; thus, there is a possibility that a joint 10 cannot be maintained in a target shape.

In contrast to the comparative example 1, the base 22 according to the Second Embodiment includes the first protrusion 81 and the second protrusion 82. In other words, a second moment of area of the base 22 with respect to the axis X1 in the Second Embodiment is greater than a second moment of area of the base 22 in the comparative example 1. Thus, according to the Second Embodiment, compared to the comparative example 1, it is possible to easily secure the rigidity of the base 22 in the width direction. Thus, at the step of mounting the gasket 1 in the space S, deformation of the base 22 is effectively prevented. In other words, it is possible to maintain the gasket in a target shape and to easily mount the gasket 1 in the space S.

The cross section of the base 22 in the comparative example 2 (Fig. 21) has a shape of a rectangle having the width W and the height H that are substantially the same as those of the base 22 according to the Second Embodiment. In the comparative example 2, the base 22 is hardly compressed in the height direction in the space S between the case 60 and the cover 70. Thus, in the comparative example, there is a possibility that reaction force applied by the base 22 to the target sealed regions 61 and 71 is excessive.

In contrast to the comparative example 2, the base 22 according to the Second Embodiment is easily compressed in the height direction compared to the comparative example 2. Thus, it is possible to reduce the probability that excessive reaction force is applied by the base 22 to the target sealed regions 61 and 71. As described above, according to the Second Embodiment, it is possible to easily mount the gasket 1 and to substantially prevent reaction force applied to the target sealed regions 61 and 71. It should be noted that the comparative example 1 and the comparative example 2 are also included within the scope of the present disclosure.

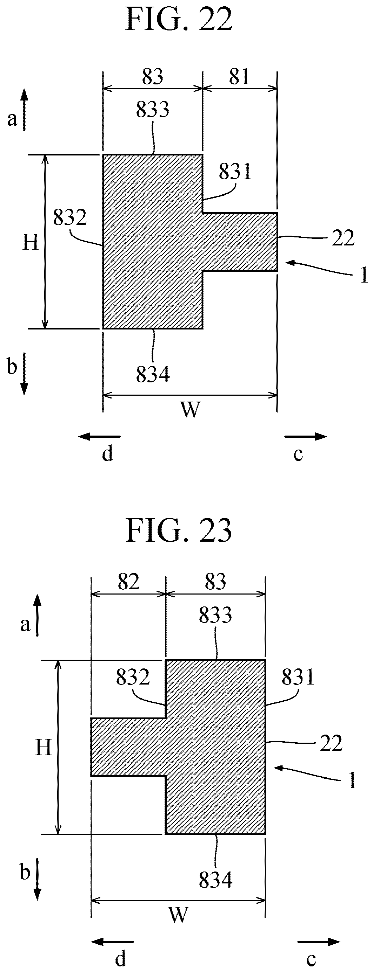

It should be noted that the cross-sectional shape of the base 22 according to the Second Embodiment is not limited to the shape shown in Fig. 19. For example, as shown in Fig. 22, the base 22 may be constituted of the first protrusion 81 and the seal 83. In other words, the second protrusion 82 according to the Second Embodiment may be omitted. In addition, as shown in Fig. 23, the base 22 may be constituted of the second protrusion 82 and the seal 83. In other words, the first protrusion 81 according to the Second Embodiment may be omitted.

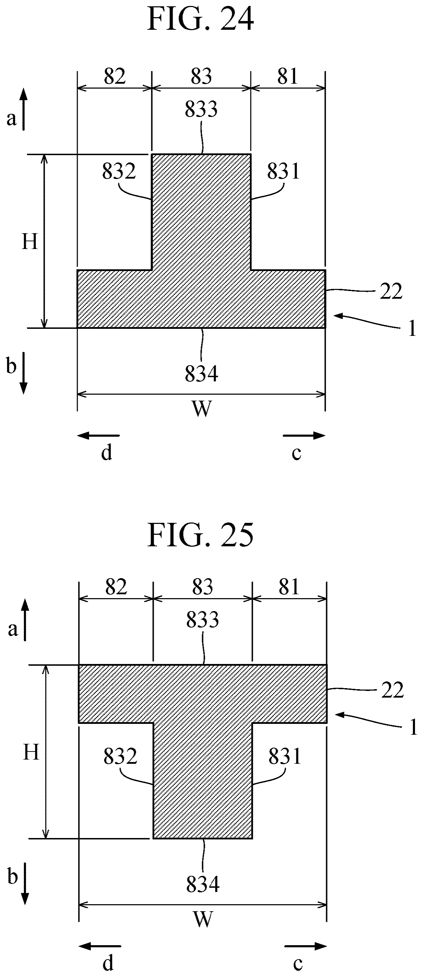

In the Second Embodiment, a configuration is described in which the first protrusion 81 and the second protrusion 82 are disposed at the center of the seal 83 in the height direction; however, the positions of the first protrusion 81 and the second protrusion 82 are not limited to the above example. For example, as shown in Fig. 24, the first protrusion 81 and the second protrusion 82 may be disposed at a lower end of the seal 83. In a configuration shown in Fig. 24, lower surfaces of the first protrusion 81 and the second protrusion 82 are disposed in a plane in which the lower surface 834 of the seal 83 is disposed. Alternatively, as shown in Fig. 25, the first protrusion 81 and the second protrusion 82 may be disposed at an upper end of the seal 83. In a configuration shown in Fig. 25, upper surfaces of the first protrusion 81 and the second protrusion 82 are disposed in a plane in which the upper surface 833 of the seal 83 is disposed.

### Modifications of Cross-sectional Shape of Joint 10

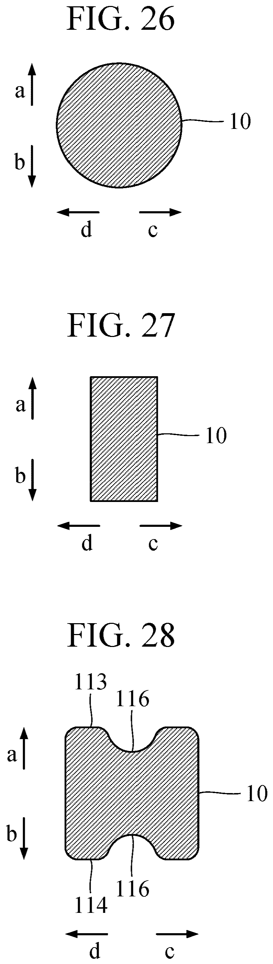

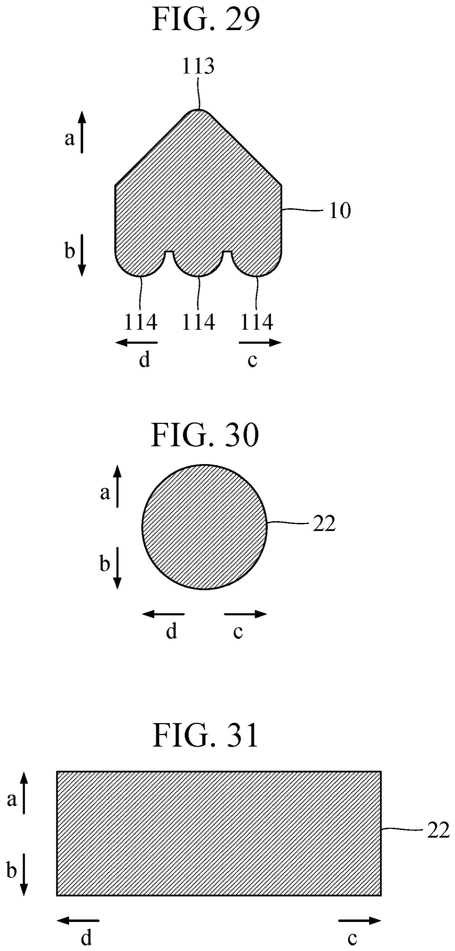

Fig. 26 is a cross section of a joint 10 of a gasket 1 according to a modification 1. Fig. 27 is a cross section of a joint 10 of a gasket 1 according to a modification 2. Fig. 28 is a cross section of a joint 10 of a gasket 1 according to a modification 3. Fig. 29 is a cross section of a joint 10 of a gasket 1 according to a modification 4.

A cross-sectional shape of a joint 10 may be freely selected, and the shape shown in Fig. 2 is an example. The cross-sectional shape of the joint 10 may be, for example, a shape as shown in Fig. 26 to Fig. 29.

A cross-sectional shape of a joint 10 shown in Fig. 26 is circular or substantially circular. A cross-sectional shape of a joint 10 shown in Fig. 27 is rectangular. It should be noted that Fig. 27 shows a vertically elongated rectangle; however, the cross-sectional shape of the joint 10 may be a horizontally elongated rectangle. According to a configuration shown in Fig. 26 or Fig. 27, it is possible to stabilize a position of the joint 10 at the step of mounting the gasket 1 in the space S between the case 60 and the cover 70. In addition, according to the configuration shown in Fig. 27, it is possible to flexibly change a height of the joint 10 in accordance with an error (variation) of a space between the case 60 and the cover 70.

A cross-sectional shape of a joint 10 shown in Fig. 28 is an H-shaped style or a substantially H-shaped style. In other words, a recess 116 is formed in each of the upper surface 113 and the lower surface 114 of the joint 10. Specifically, the recess 116 extending along the joint 10 is formed in a central portion of each of the upper surface 113 and the lower surface 114 in the width direction. In other words, the upper surface 113 is divided by a recess 116 into two sections, and the lower surface 114 is divided by the other recess 116 into two sections. According to the joint 10 shown in Fig. 28, since each of the target sealed regions 61 and 71 is in contact with a plurality of sealing surfaces, it is possible to stabilize a position of the joint 10 at the step of mounting the gasket 1 in the space S between the case 60 and the cover 70.

A cross-sectional shape of a joint 10 shown in Fig. 29 is shaped to include a single upper surface 113 and three lower surfaces 114. The three lower surfaces 114 are provided to be spaced apart from one another in the width direction. The cross-sectional shape of the joint 10 shown in Fig. 29 is a shape of a mountain having a peak at the upper surface 113 or is substantially a shape of the mountain. According to the joint 10 shown in Fig. 29, since the target sealed region 61 is in contact with a plurality of sealing surfaces, it is possible to stabilize a position of the joint 10 at the step of mounting the gasket 1 in the space S between the case 60 and the cover 70. In addition, according to the joint 10 shown in Fig. 29, since a shape of the upper surface 113 and a shape of the lower surface 114 are different from each other, it is possible to easily determine the height direction during assembly and to facilitate assembly by a worker.

### Modifications of Cross-sectional Shape of Base 22

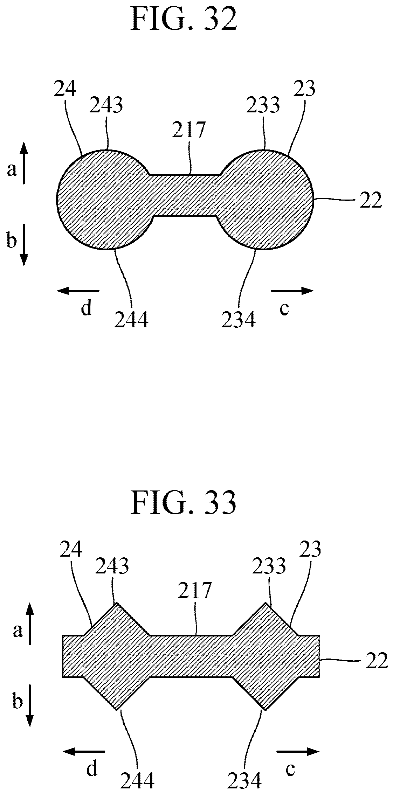

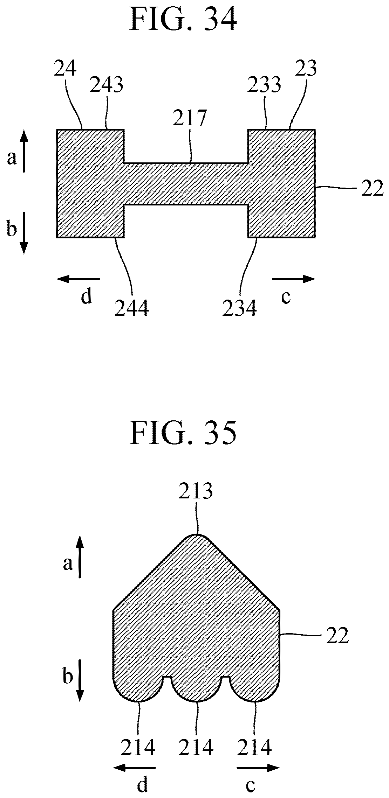

Fig. 30 is a cross section of a base 22 of a gasket 1 according to a modification 5. Fig. 31 is a cross section of a base 22 of a gasket 1 according to a modification 6. Fig. 32 is a cross section of a base 22 of a gasket 1 according to a modification 7. Fig. 33 is a cross section of a base 22 of a gasket 1 according to a modification 8. Fig. 34 is a cross section of a base 22 of a gasket 1 according to a modification 9. Fig. 35 is a cross section of a base 22 of a gasket 1 according to a modification 10.

A cross-sectional shape of a base 22 may be freely selected, and the shape shown in Fig. 4 is an example. The cross-sectional shape of the base 22 may be, for example, a shape as shown in Fig. 30 to Fig. 35.

A cross-sectional shape of a base 22 shown in Fig. 30 is circular or substantially circular. In addition, a cross-sectional shape of a base 22 shown in Fig. 31 is rectangular.

Each of the bases 22 shown in Fig. 32 to Fig. 34 includes the first seal 23, the second seal 24, and the connector 217. The first seal 23 and the second seal 24 are connected by the connector 217, which extends in the width direction, to each other.

A cross-sectional shape of each of the first seal 23 and the second seal 24 shown in Fig. 32 is circular or is substantially circular. A cross-sectional shape of each of the first seal 23 and the second seal 24 shown in Fig. 33 is a shape including a triangular shape or a substantially triangular shape, which has an upward apex, and a triangular shape or a substantially triangular shape, which has a downward apex. A cross-sectional shape of each of the first seal 23 and the second seal 24 shown in Fig. 34 is rectangular or substantially rectangular. According to each of the bases 22 shown in Fig. 34 to Fig. 32, since each of the target sealed regions 61 and 71 is in contact with a plurality of sealing surfaces, it is possible to stabilize a position of the base 22 at the step of mounting the gasket 1 in the space S between the case 60 and the cover 70.

As in the joint 10 shown in Fig. 29, a cross-sectional shape of the base 22 shown in Fig. 35 is shaped to include a single upper surface 213 and three lower surfaces 214. The three lower surface 214 are provided to be spaced apart from one another in the width direction. The cross-sectional shape of the base 22 shown in Fig. 35 is a shape of a mountain having a peak at the upper surface 213 or is substantially a shape of the mountain. According to the base 22 shown in Fig. 35, since the target sealed region 61 is in contact with a plurality of sealing surfaces, it is possible to stabilize a position of the base 22 at the step of mounting the gasket 1 in the space S between the case 60 and the cover 70.

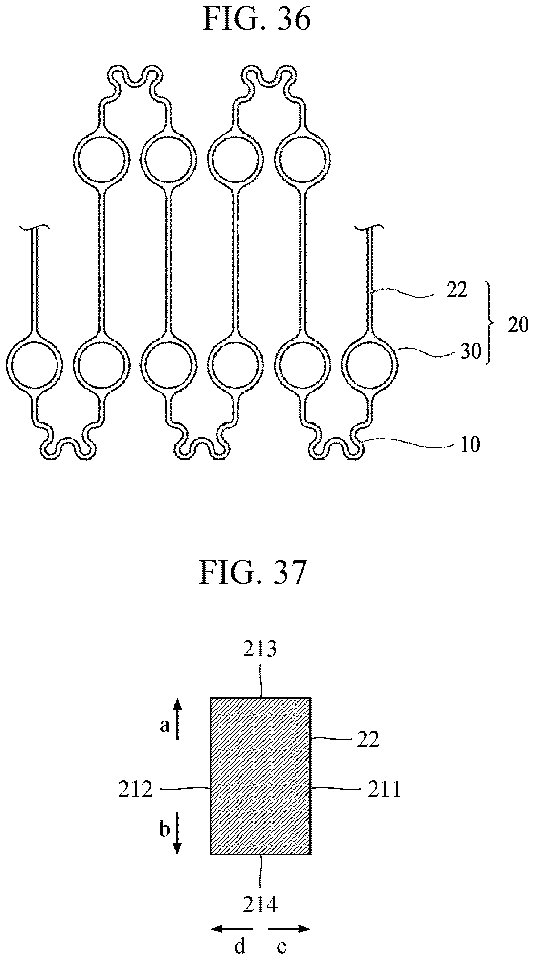

Fig. 36 is a plan view showing a schematic configuration of a gasket 1 according to a modification 11. In addition, Fig. 37 is a cross section of a base 22 of the gasket 1 according to the modification 11. In the gasket 1 shown in Fig. 36 and Fig. 37, a cross-sectional shape of the base 22 is rectangular. Specifically, the cross-sectional shape of the base 22 in Fig. 37 is a vertically elongated rectangle in which the side surface 211 and the side surface 212 are longer than the upper surface 213 and the lower surface 214. According to the base 22 having such a cross-sectional shape, it is possible to reduce the reaction force applied by the target sealed regions 61 and 71.

It should be noted that in this disclosure, the description "n-th" (n is a natural number) is used only as a formal and convenient label for distinguishing elements in description, and it has no substantive meaning. Thus, a position of each of the element, an order of manufacture of the elements, etc., are not limited by reference to the description "n-th."

As described above, the embodiments according to the present invention are described; however, the present invention is not limited to the above embodiments and includes all aspects included in the concept of the present invention and the scope of the claims. In addition, each of the elements may appropriately and selectively be combined so as to provide at least one of the above-described effects. For example, in the above embodiments, a shape, a material, an arrangement, a size, etc., of each element may appropriately be changed depending on a specific mode of use of the present invention.

### Description of Reference Signs

1... gasket, 10... joint, 11... end of joint, 20... body, 21... end of body, 22... base, 23... first seal, 24... second seal, 30... guide, 31... third seal, 32... hole, 40... cover fixing pin, 41, 51... shaft, 42, 53... head, 50... positioning pin, 52... insertion hole, 54... side surface, 60... case, 61, 71... target sealed region, 62... pin insertion hole, 63... corner, 70... cover, 73... corner, 111, 311... outer peripheral surface, 112, 312... inner peripheral surface, 113, 213, 313... upper surface, 114, 214, 314... lower surface, 115, 315... inclined surface, 116... recess, 217... connector, 33... protrusion, C...center line, F1, F2... force, S... space, X1, X2... axis, 0... angle.

## Claims

1. A gasket capable of sealing a loop-shaped target sealed region between a pair of members combined with each other, the gasket comprising:
a base having a shape along a circumferential direction of the target sealed region;
a joint connected to the base, a bending rigidity of the joint in a width direction being lower than that of the base; and
a guide for positioning of the gasket in the target sealed region,
wherein the guide includes a hole along a joining direction of the pair of members, and
wherein a positioning pin fixed to the pair of members is inserted in the hole.

2. The gasket according to Claim 1, wherein a planar shape of the joint is a shape in which a section protruding toward an inside of the target sealed region and a section protruding toward an outside of the target sealed region are alternately repeated.

3. The gasket according to Claim 1 or Claim 2, wherein the guide includes a protrusion protruding from an inner peripheral surface of the hole and being capable of contacting the positioning pin.

4. The gasket according to Claim 3, further comprising:
a plurality of guides including the guide.

5. The gasket according to Claim 1 or Claim 2, wherein a planar shape of the hole corresponds to a cross-sectional shape of the positioning pin.

6. The gasket according to Claim 1, wherein each of the pair of members includes no mounting groove for mounting the gasket.

7. The gasket according to Claim 1,
wherein the base includes:
a seal in contact with each of the pair of members; and
a first protrusion protruding from an outer wall surface of the seal along the seal.

8. The gasket according to Claim 7,
wherein the base further includes:
a second protrusion protruding from an inner wall surface of the seal along the seal.

9. The gasket according to Claim 8, wherein the first protrusion and the second protrusion are disposed at a center of the seal in a height direction.

10. The gasket according to Claim 1,
wherein the base includes:
a seal in contact with each of the pair of members; and
a second protrusion protruding from an inner wall surface of the seal along the seal.

11. A sealing structure comprising:
a pair of members combined with each other; and
a gasket sealing a loop-shaped target sealed region between the pair of members,
wherein the gasket includes:
a base having a shape along a circumferential direction of the target sealed region;
a joint connected to the base, a bending rigidity of the joint in an in-plane direction of the target sealed region being lower than that of the base; and
a guide for positioning of the gasket in the target sealed region,
wherein the guide includes a hole along a joining direction of the pair of members, and
wherein a positioning pin fixed to the pair of members is inserted in the hole.
